(19) Europäisches Patentamt
European Patent Office
Office européen des brevets

(11) **EP 1 919 212 A1**

(12) **EUROPEAN PATENT APPLICATION**

(43) Date of publication:
**07.05.2008 Bulletin 2008/19**

(51) Int Cl.:
**H04N 7/01** (2006.01)

(21) Application number: **07118862.7**

(22) Date of filing: **19.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.10.2006 KR 20060102062**

(71) Applicant: **Samsung Electronics Co., Ltd.**
**Suwon-si, Gyeonggi-do (KR)**

(72) Inventors:
• **Kim, Yong-Deok**
**Gyeonggi-do (KR)**
• **Kim, Chan-Yul**
**Gyeonggi-do (KR)**
• **Joo, Young-Hun**
**Gyeonggi-do (KR)**
• **Choi, Kwang-Pyo**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for interpolating chroma signal to minimize operation overhead**

(57) Disclosed is a method for interpolating chroma signals while minimizing the calculation overhead. To this end, multiplication requiring a large operation is removed when obtaining a fractional-pel value through chroma interpolation, and a simple linear interpolation method is used in order to reduce the number of operations including addition, subtraction, etc. In this way, it is possible to considerably reduce the operation amount for an ME and an MC which normally consume more than about 30% of H.264 system processing power.

FIG.2

EP 1 919 212 A1

## Description

The present invention relates to compression and restoration of an image, and more particularly to a method and an apparatus for interpolating an image in order to compress and restore the image.

An H.264 (next generation moving picture compression standard) recently established by both an ITU-T and an ISO has greatly evolved in terms of flexibility, which enables easy adaptation to various network environments and improved the encoding efficiency of a moving picture as compared to the existing technology standards, such as an MPEG-2 and an MPEG-4 (part 2). However, the H.264 is disadvantageous in that the complexity of an encoder and a decoder is considerably increased as compared to an existing compression scheme. This is because the encoder must determine many more parameters and encoding modes during operation as compared to the existing standard. Further, the decoder's amount of calculation significantly increases due to a deblocking filter and motion compensation in the unit of quarter-pel, etc.

In addition, with a rapid spread of a portable terminal, such as a cell phone, a PDA, a portable game set, etc., the data traffic has increased more recently in order to provide multimedia including movies and DMB services through such a terminal. Moreover, in the case of a codec, such as an H.264 mainly used for portable broadcastings including terrestrial or satellite DMB, the consumption of battery increases due to a large operation amount. As a result, the usage time of a terminal is shortened.

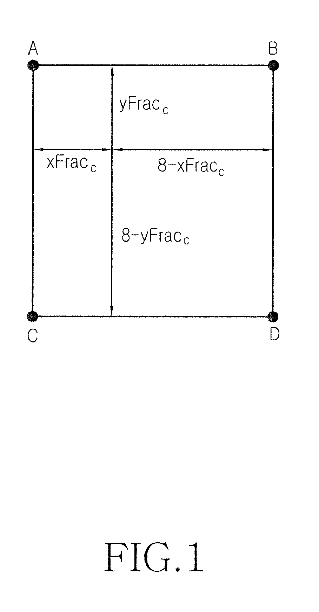

FIG. 1 is an exemplary diagram illustrating a conventional prediction interpolation method of chroma signals by an H.264 codec. For example, in the case of using (4:2:0) sampling, a motion vector of quarter-pel resolution in a luminance component requires 1/8 sample resolution in a chroma component. If a linear interpolation is used as illustrated in FIG. 1, a sample is generated, which is interpolated in a 1/8 sample interval between integer samples of each chroma component. Respective sub-sample positions are calculated through the linear interpolation of adjacent integer sample positions A to D. In the linear interpolation, the original signals are multiplied by coefficients according to distances so as to implement interpolation. In the case of an H.264 codec, in a luminance component, the value of a half-pel position is calculated using a 6-tab Finite Impulse Response (FIR) filter in order to remove an aliasing component. An integer sample and the half-pel component value are averaged to obtain a quarter-pel value. However, in a chroma component, all fractional-pel values are calculated through an averaging operation.

According to the prior art as described above, in the case of the chroma interpolation of an H.264 system, a large operation is required. However, there is a limitation in applying the H.264 system to a terminal having limitations on power consumption and processor capacity due to such operation. In the chroma interpolation, when using (4:2:0) sampling, a large operation capability is required because an eight-pel must be calculated. Even when using (4:2:2) sampling, a large operation is required because a quarter-pel must be calculated, which is smaller than that required when an eight-pel is calculated.

As described above, in the case of the chroma interpolation of the existing H.264 system, a scheme of multiplying a coefficient according to distances up to a fractional point to be obtained from each integer sample requires a large operation. Specifically, as illustrated in FIG. 1, in order to calculate one fractional-pel point, an operation process is required, which includes eight instances of multiplication, three instances of addition, four instances of subtraction, and one time of shifting. Accordingly, in order to apply the application of the H.264 system to various fields including a terminal, etc., such operation amount must be reduced.

Accordingly, the present invention has been made to solve the above-mentioned problems occurring in the prior art and provides additional advantages below. It is the object of the present invention to provide a method and an apparatus for interpolating chroma signals which minimize the calculation amount in order to efficiently reduce the operation overhead required for the chroma interpolation of an H.264 system.

This object is solved by the subject matter of the independent claims.

Preferred embodiments are defined in the dependent claims.

In accordance with one aspect of the present invention, there is provided a method for interpolating chroma signals to minimize calculation amount. The method includes the steps of: applying an average value of four integer samples to rounding function in one interpolation block, thereby calculating a primary central point located in a center of the integer samples; calculating half-pels located in a row direction and a column direction from among the four integer samples by rounding an average value of integer samples belonging to each row and each column; calculating respective secondary central points located in centers of the four integer samples and the primary central point; calculating quarter-pels by using the integer samples and the calculated half-pels; and calculating eight-pels in a diagonal direction by using the integer samples, the half-pels and the quarter-pels.

In accordance with another aspect of the present invention, there is provided an apparatus for interpolating chroma signals to minimize calculation amount. The apparatus being respectively included in an image decoder and an image encoder includes: a 1/2 interpolation operation unit for applying an average value of four integer samples in one interpolation block to rounding function, thereby calculating a primary central point located in a center of the integer samples, and calculating half-pels located in a row direction and a column direction from among the four integer samples by rounding an average value of integer samples belonging to each row and each column; a 1/4 interpolation operation unit for calculating respective secondary central points located in centers of the four integer samples and the primary central point, and calculating quarter-pels by using the integer samples and the calculated half-pels; and a 1/8 interpolation operation unit for calculating eight-pels in a diagonal direction by using the integer samples, the half-pels and the quarter-pels.

The above features and advantages of the present invention will be more apparent from the following detailed description taken in conjunction with the accompanying drawings, in which:

FIG. 1 is an exemplary diagram illustrating a conventional prediction interpolation method of chroma signals by an H.264 codec;
FIG. 2 is a block diagram illustrating a decoder according to an embodiment of the present invention;
FIG. 3 is a block diagram illustrating an encoder according to an embodiment of the present invention;
FIG. 4 is a diagram illustrating a 1/2 interpolation operation according to an embodiment of the present invention;
FIG. 5 is a diagram illustrating a 1/4 interpolation operation according to an embodiment of the present invention;
FIG. 6 is a diagram illustrating a 1/8 interpolation operation according to one embodiment of the present invention; and
FIG. 7 is a diagram illustrating a 1/8 interpolation operation according to another embodiment of the present invention.

An embodiment of the present invention will be described in detail herein below with reference to the accompanying drawings. For the purposes of clarity and simplicity, a detailed description of known functions and configurations incorporated herein will be omitted as it may obscure the subject matter of the present invention.

The present invention discloses a method of interpolating chroma signals with a reduced overhead. To this end, the teachings of the present invention provides a removal of multiplication requiring a large operation when obtaining a fractional-pel value through chroma interpolation, and uses a simple linear interpolation method in order to reduce the number of operations, such as addition, subtraction, etc. As a result, it is possible to considerably reduce the operation overhead when performing Motion Estimation (ME) and Motion Compensation (MC), which normally consume more than about 30% of H.264 system processing power. Accordingly, the present invention enables the application of an H.264 system to various fields including a terminal, etc. which was not possible in the prior art.

Hereinafter, the operation of an interpolation circuit performing the functions according to the present invention will be described in detail.

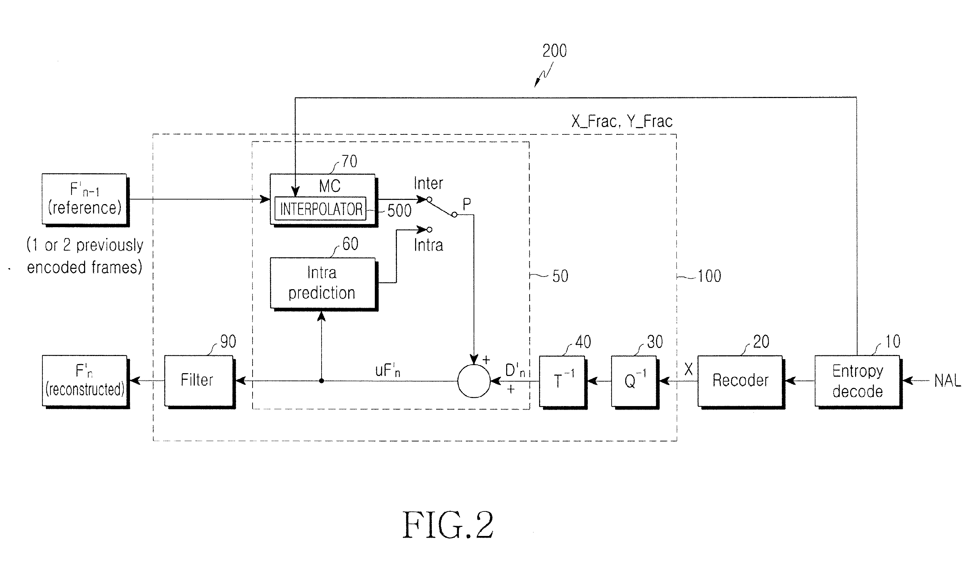

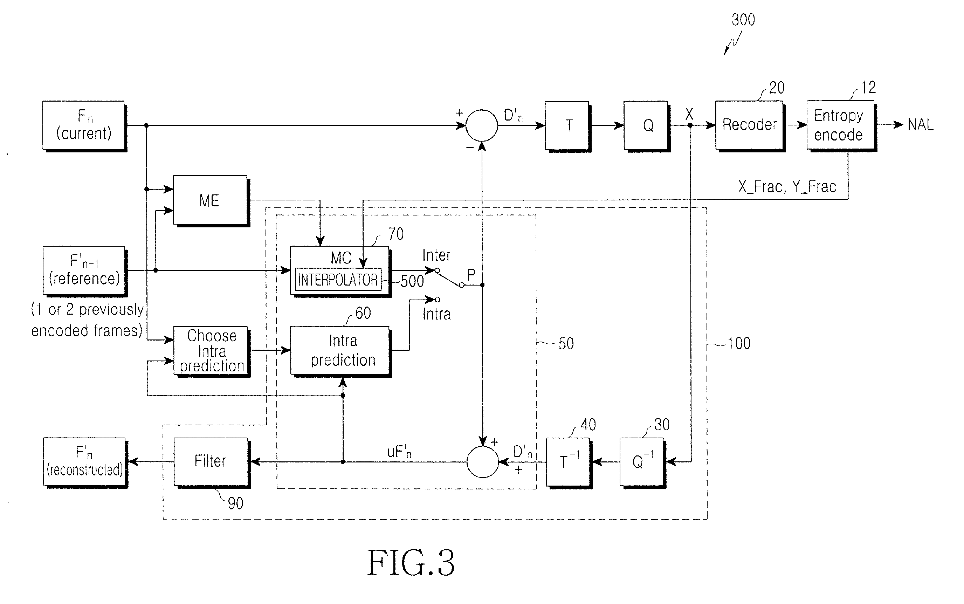

FIG. 2 is a block diagram illustrating a decoder 200 according to an exemplary embodiment of the present invention, and FIG. 3 is a block diagram illustrating an encoder 300 according to an exemplary embodiment of the present invention.

As the decoder 200 and the encoder 300 illustrated in FIGs. 2 and 3 conform to an H.264 standard, the same reference numerals are used to designate the same elements. Note that the elements indicated by a reference numeral 100 is commonly included in the decoder 200 and the encoder 300 according to an H.264 standard. Accordingly, in the present invention, the same elements will not be described again to avoid redundancy, and the decoder 200 will be described as an illustrate example for both cases.

Referring to FIG. 2, the decoder 200 includes an entropy decoding unit 10, a reordering unit 20, an inverse quantization unit 30, an Inverse Discrete Cosine Transform (IDCT) 40, an intra/inter data prediction unit 50, and an in-loop deblocking filter 90. The entropy decoding unit 10 receives a Network Abstraction Layer (NAL), which is a compressed bitstream, and performs entropy decoding. The reordering unit 20 reorders the data into groups, and the inverse quantization unit 30 inverse-quantizes the data output from the reordering unit 20, and finally the IDCT 40 performs inverse discrete cosine transform for the inverse-quantized data.

The intra/inter data prediction unit 50 performs and compensates for intra prediction or inter prediction, and the in-loop deblocking filter 90 removes errors occurring in the inverse quantization process. The intra/inter data prediction unit 50 includes an intra prediction unit 60 for performing intra prediction, and a MC unit 70 for performing inter prediction. The MC unit 70 includes an interpolator 500 for interpolating an image in order to perform more precise MC.

Since each of the decoder 200 and the encoder 300 illustrated in FIGs. 2 and 3 conforms to the H.264 standard, the interpolator 500 performs half-pel interpolation, quarter-pel interpolation, and eight-pel interpolation.

Hereinafter, the interpolation process performed by the interpolator 500 will be described in detail.

When performing chroma interpolation for an ME, the interpolator 500 must use four integer samples, and calculates fractional-pels from the four integer samples. The number of fractional-pel points is 77 obtained by excluding four integer samples from all pixels (9 X 9 = 81) within one reference partition.

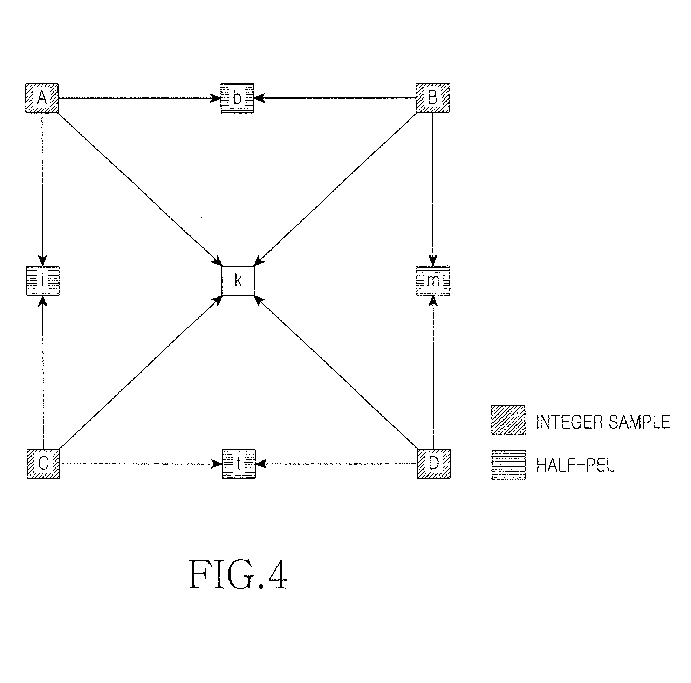

In the present invention, for interpolation for a decoded image, a primary central point located in the center of the four integer samples is found, and most points are obtained based on this primary central point. Herein, since the points calculated from the central point of the four integer samples exceeds the total 60%, the accuracy for the central point k value is required. Hereinafter, the central point k value and a 1/2 interpolation operation according to the embodiment of the present invention will be described with reference to FIG. 4. FIG. 4 illustrates a method of calculating the central point k value and half-pel values from the four integer samples A to D, and the central point k value is calculated through Equation 1 below.

## Equation 1

$$K = round\{tg(A + B + C + D) / 4\}$$

In Equation 1, the k represents the central point calculated by linearly interpolating the four integer samples. That is, the central point k can be calculated by applying the average value of the four integer samples to rounding function in one interpolation block. The central point k is calculated through three instances of addition and one time of shifting. The operator "round" is an operator used for rounding off the average value of the four integer samples.

In FIG. 4, each half-pel value is calculated through Equation 2 below.

## Equation 2

$$b = round\{(A + B) / 2\}$$
$$i = round\{(A + C) / 2\}$$
$$m = round\{(B + D) / 2\}$$
$$t = round\{(C + D) / 2\}$$

In Equation 2, the b, i, m and t each half-pel points. As expressed by Equation 2, the half-pel is calculated through one time of addition and one time of shifting. Based on Equation 2, the interpolator 500 calculates half-pels located in a row direction and a column direction of the four integer samples by rounding the average of integer samples belonging to each row and each column.

Hereinafter, the construction of one interpolation block will be described with reference to FIG. 4. The alphabet uppercase letters A to D denote integer pixels, i.e. pixels obtained through decoding, and the b, i, m and t denote pixels obtained through 1/2 interpolation.

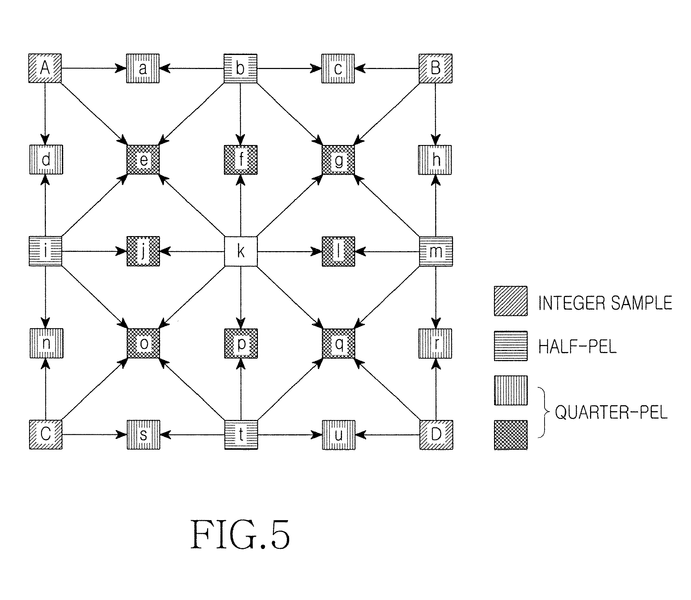

FIG. 5 is a diagram illustrating a method for interpolating values of 1/4 positions. The a, c, d, h, n, r, s and u denote pixels calculated through 1/4 interpolation, which will be referred to as quarter-pels. That is, the interpolator 500 performs 1/4 interpolation based on Equation 3 below.

## Equation 3

$$e = round\{(A + b + i + k) / 4\}$$
$$f = round\{(b + k) / 2\}$$
$$g = round\{(b + B + k + m) / 4\}$$
$$j = round\{(i + k) / 2\}$$
$$l = round\{(m + k) / 2\}$$
$$o = round\{(i + k + C + t) / 4\}$$
$$p = round\{(t + k) / 2\}$$
$$q = round\{(k + m + t + D) / 4\}$$

In Equation 3, the e, g, o and q denote secondary central point value, and the f, j, l and p denote quarter-pels. In FIG. 4, the e, g, o and q are calculated by averaging adjacent four points in the same way as that for obtaining the central point k. Otherwise, the e, g, o and q are respectively calculated by applying the average of each of the four integer samples A to D and the primary central point k to rounding function. The secondary central points are respectively located in the centers of each of the four integer samples and the primary central point k.

In order to considerably reduce operation overhead even when loss occurs in view of accuracy, the e, g, o and q values may also be calculated through interpolation from the upper left to the lower right direction or from the upper right to the lower left direction. Hereinafter, a process for obtaining the e, g, o and q will be described. For example, in order to calculate the e, the b, i and k must be first calculated. The b and i are calculated through one time of addition and one time of shifting as expressed by Equation 2, and the k is calculated through three instances of addition and one time of shifting. After the A, b, i and k diagonally located with respect to the e are calculated in this way, the four A, b, i and k values are averaged to calculate the e. Herein, when averaging the four values, a total of eight instances of addition and four instances of shifting are required because three instances of addition and one time of shifting are added.

In FIG. 5, the quarter-pels may be classified as the a, c, d, h, n, r, s and u corresponding to the edges of the reference partition, and the f, j, l and p corresponding between the primary central point and the half-pel inside the reference partition. Among them, the a, c, d, h, n, r, s and u are calculated through the following scheme. Such quarter-pels are obtained by performing a linear interpolation by using the integer samples and the calculated half-pels. For example, the b must be first calculated in order to calculate the a. The b can be calculated through one time of addition and one time of shifting as expressed by Equation 2. As a result, the a is calculated through a total of two instances of addition and two instances of shifting because one time of addition and one time of shifting are added to calculate the b.

Further, the f, j, l and p can be respectively calculated by calculating values of the points in both sides and averaging the values. For example, in order to calculate the f, a total of five instances of addition and three instances of shifting are required because the b and k must be calculated, and the two calculated values must be averaged.

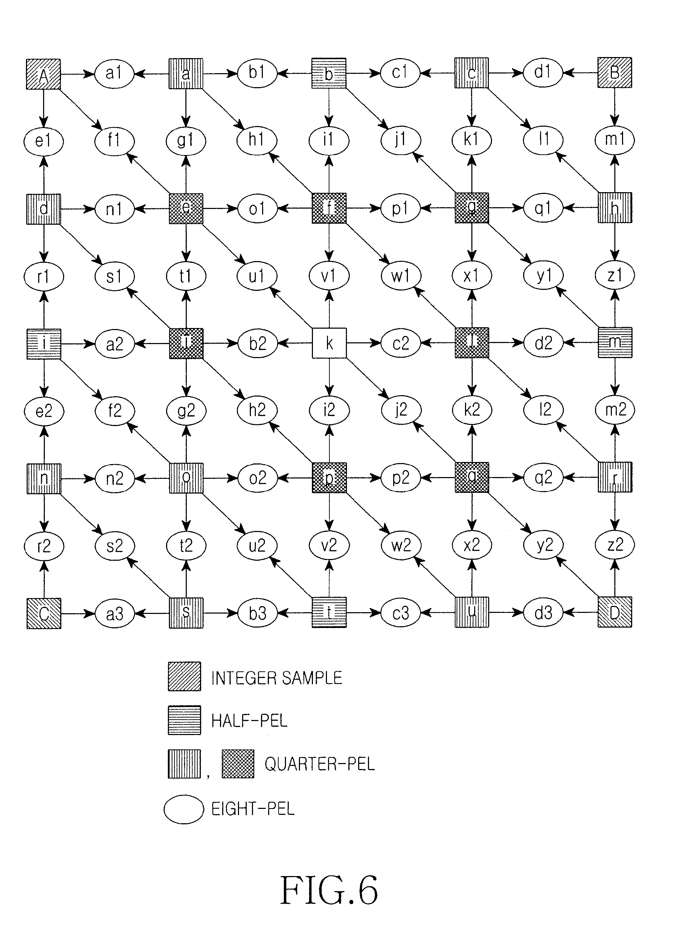

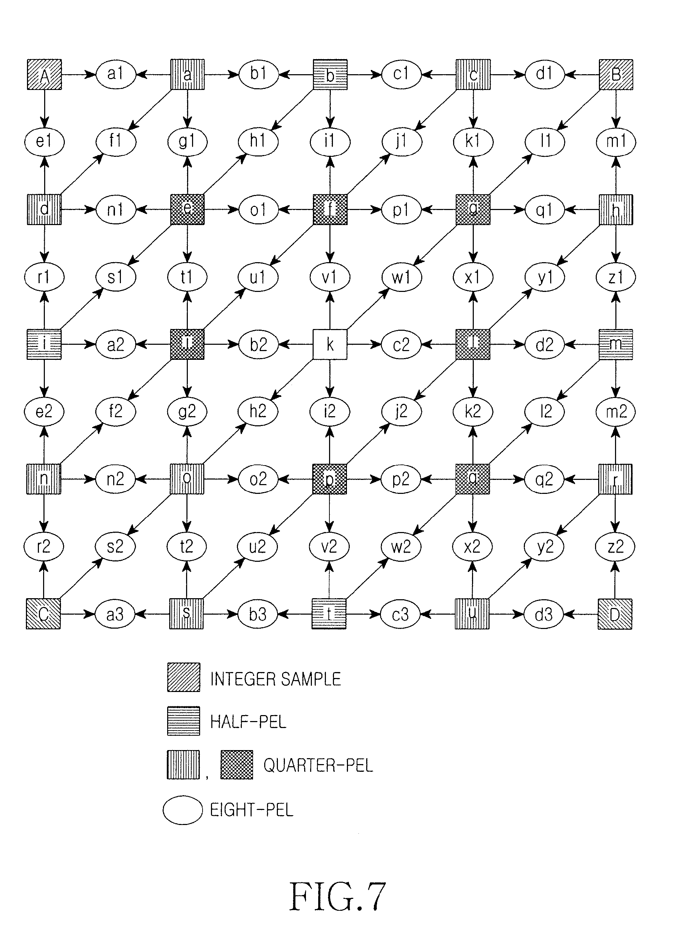

FIGs. 6 and 7 are diagrams illustrating 1/8 interpolation operation according to the present invention. When diagonally performing the interpolation, the interpolator 500 can perform the 1/8 interpolation by using one of the methods illustrated in FIGs. 6 and 7. FIG. 6 illustrates a method of performing the 1/8 interpolation by using pixels in the diagonal direction from the upper left to lower right, and FIG. 7 illustrates a method for performing the 1/8 interpolation by using pixels in the diagonal direction from the upper right to lower left. For the quarter-pels, the four point values are averaged in consideration of accuracy when calculating the e, g, o and q values. However, for the eight-pels, the two point values are averaged in a diagonal in order to considerably reduce operation overhead. In order to improve the accuracy, even though the operation amount increases, it may also possible to calculate an average of four adjacent values.

In the meantime, interpolation for each pixel constituting one reference partition (i.e. interpolation block) illustrated in FIG. 4 may be divided into a total of three stages. Corresponding to this, the present invention can subdivide the construction of the interpolator 500. The detailed construction of the interpolator 500 is not shown, but it can be largely divided into three parts according to operation stages. Since the half-pels including the central point k are subjected to a predetermined operation by using only values of given integer pixels, it belongs to the first stage. The predetermined operation is performed by a 1/2 interpolation operation unit within the interpolator 500. The operation in the second stage using the operation results in the first stage is performed by a 1/4 interpolation operation unit, and the operation in the third stage using the operation results in the second stage is performed by a 1/8 interpolation operation unit. From the results of the operation in the first stage, the 1/2 interpolation operation unit of the interpolator 500 can obtain the central points and half-pels corresponding to the k, b, i, m and t. From the results of the operation in the second stage, the 1/4 interpolation operation unit of the interpolator 500 can obtain the quarter-pels, which are indicated by the edges a, c, d, h, n, r, s and u of the reference partition and the f, j, l and p corresponding to the inside of the reference partition, and the secondary central points e, g, o and q. Similarly to this, from the results of the operation in the third stage, the 1/8 interpolation operation unit of the interpolator 500 can obtain eight-pels a1, b1, c1, d1, etc., indicated by ovals in FIGs. 6 and 7.

Hereinafter, the operation amount required for performing 1/8 interpolation will be described in detail with reference to FIGs. 6 and 7.

In FIGs. 6 and 7, the eight-pels can be largely classified into 13 types. First, in the case of the eight-pels corresponding to the a1, d1, e1, m1, r2, a3, d3 and z2, for example, the a1 can be obtained by calculating the a (two instances of addition and two instances of shifting) and then performing averaging (one time of addition and one time of shifting). In short, a total of three instances of addition and three instances of shifting are required.

In the case of the eight-pels of the b1, c1, r1, z1, e2, m2, b3 and c3, for example, the b1 can be obtained by calculating the a (two instances of addition and two instances of shifting), the b (one time of addition and one time of shifting), and then averaging the a and b (one time of addition and one time of shifting). In short, a total of four instances of addition and four instances of shifting are required.

In the case of the eight-pels of the i1, a2, d2 and v2, for example, the i1 can be obtained by calculating the f (five instances of addition and three instances of shifting), the b (one time of addition and one time of shifting), and then averaging the f and b (one time of addition and one time of shifting). In short, a total of seven instances of addition and five instances of shifting are required.

In the case of the eight-pels of the g1, n1, k1, q1, n2, t2, q2 and x2, for example, the g1 can be obtained by calculating the a (two instances of addition and two instances of shifting), the e (eight instances of addition and four instances of shifting), then averaging the g1 and e (one time of addition and one time of shifting). In short, a total of eleven instances of addition and seven instances of shifting are required.

In the case of the eight-pels of the o1, p1, t1, x1, g2, k2, o2 and p2, for example, the o1 can be obtained by calculating the f (five instances of addition and three instances of shifting), the e (eight instances of addition and four instances of shifting), then averaging the o1 and e (one time of addition and one time of shifting). In short, a total of fourteen instances of addition and eight instances of shifting are required.

In the case of the eight-pels of the f1, l1 and y2, for example, the f1 can be obtained by calculating the e (eight instances of addition and four instances of shifting), and then averaging the f1 and A (one time of addition and one time of shifting). In short, a total of nine instances of addition and five instances of shifting are required.

In the case of the eight-pels of the h1, s1 and w2, for example, the h1 can be obtained by calculating the a (two instances of addition and two instances of shifting), the f (five instances of addition and three instances of shifting), then averaging the a and f (one time of addition and one time of shifting). In short, a total of eight instances of addition and six instances of shifting are required.

In the case of the eight-pels of the j1, y1, f2 and u2, for example, the j1 can be obtained by calculating the b (one time of addition and one time of shifting), the g (eight instances of addition and four instances of shifting), then averaging the b and g (one time of addition and one time of shifting). In short, a total of ten instances of addition and six instances of shifting are required.

In the case of the eight-pels of the u1 and j2, for example, the u1 can be obtained by calculating the e (eight instances of addition and four instances of shifting), the k (three instances of addition and one time of shifting), then averaging the e and k (one time of addition and one time of shifting). In short, a total of twelve instances of addition and six instances of shifting are required.

In the case of the eight-pels of the w1 and h2, for example, the w1 can be obtained by calculating the f (five instances of addition and three instances of shifting), the I (five instances of addition and three instances of shifting), then averaging the f and I (one time of addition and one time of shifting). In short, a total of eleven instances of addition and seven instances of shifting are required.

In the case of the eight-pels of the 12, for example, the 12 can be obtained by calculating the r (two instances of addition and two instances of shifting), the I (five instances of addition and three instances of shifting), then averaging the r and I (one time of addition and one time of shifting). In short, a total of eight instances of addition and six instances of shifting are required.

In the case of the eight-pels of the s2, for example, the s2 can be obtained by calculating the n (two instances of addition and two instances of shifting), the s (two instances of addition and two instances of shifting), then averaging the n and s (one time of addition and one time of shifting). In short, a total of five instances of addition and five instances of shifting are required.

In the case of the eight-pels of the v1, b2, c2 and i2, for example, the v1 can be obtained by calculating the f (five instances of addition and three instances of shifting), the k (three instances of addition and one time of shifting), then averaging the f and k (one time of addition and one time of shifting). In short, a total of nine instances of addition and five instances of shifting are required.

According to the present invention as described above, a total of 545 instances of addition and 359 instances of subtraction are performed based on the central point, half-pels, secondary central points, quarter-pels classified into two types, and eight-pels classified into 13 types. As a result, the total number of operations is 904.

In the case of the eight-pels, since 77 fractional points per four integer samples must be obtained, a very complicated operation is required. However, by using the present invention, the operation amount can be reduced up to maximum 27%. In the case of the existing method, the total number of operations for obtaining the 77 fractional points corresponds to the total 1232 {= 616 (eight instances of multiplication X 77) + 231 (three instances of addition X 77) + 308 (four instances of subtraction X 77) + 677 (one time of shifting X 77)}. However, in the present invention, the total 904 instances of operation is performed, and the operation amount can be reduced up to maximum 27% based on the total number of operations. In addition, considering that the multiplication operation of the existing method requires a clock cycle which is at least twice as fast as that used in a simple addition or subtraction in a typical processor, the reduced operation amount reaches about 51%.

According to the present invention as described above, central points are obtained within a reference partition, and a linear interpolation including addition and subtraction is performed using the central points, so that operation amount can be considerably reduced. Thus the application of an H.264 system can be expanded and applied to various fields including a terminal, etc.

Although a preferred embodiment of the present invention has been described for illustrative purposes, those skilled in the art will appreciate that various modifications, additions and substitutions are possible, without departing from the scope of the invention as disclosed in the accompanying claims.

**Claims**

1. A method for interpolating chroma signals, the method comprising the steps of:

   applying an average value of four integer samples to rounding function in one interpolation block in order to calculate a primary central point located in a center of the integer samples; calculating half-pels located in a row direction and a column direction from among the four integer samples by rounding an average value of integer samples belonging to each row and each column; calculating respective secondary central points located in centers of the four integer samples and the primary central point; calculating quarter-pels using the integer samples and the calculated half-pels; and calculating eight-pels in a diagonal direction using the integer samples, the calculated half-pels. and the calculated quarter-pels.

2. The method as claimed in claim 1, wherein the secondary central points are calculated by rounding an average value of each of the secondary central points and four adjacent points.

3. The method as claimed in claim 1, wherein the secondary central points are calculated by rounding an average value of each of the four integer samples and the primary central point.

4. The method as claimed in one of claims 1 to 3, wherein the quarter-pels are classified as quarter-pels in edges of the one interpolation block, and remaining quarter-pels corresponding between the primary central point and the calculated half-pels.

5. The method as claimed in claim 4, wherein the quarter-pels in the edges are calculated by applying an average value of each of the integer samples and the calculated half-pels to rounding function.

6. The method as claimed in claim 4, wherein the remaining quarter-pels are calculated by applying an average value of the primary central point and the calculated half-pels to rounding function.

7. The method as claimed in one of claims 1 to 6, wherein the eight-pels are calculated by rounding an average value of two adjacent point values in the diagonal direction.

8. An apparatus for interpolating chroma signals, comprising:

   a 1/2 interpolation operation unit for applying an average value of four integer samples in one interpolation block to rounding function in order to calculate a primary central point located in a center of the integer samples, and calculating half-pels located in a row direction and a column direction from among the four integer samples by rounding an average value of integer samples belonging to each row and each column;
   a 1/4 interpolation operation unit for calculating respective secondary central points located in centers of the four integer samples and the primary central point, and calculating quarter-pels using the integer samples and the calculated half-pels; and
   a 1/8 interpolation operation unit for calculating eight-pels in a diagonal direction using the integer samples, the calculated half-pels, and the calculated quarter-pels.

9. The apparatus as claimed in claim 8, wherein the secondary central points are calculated by rounding an average value of each of the secondary central points and four adjacent points.

10. The apparatus as claimed in claim 8, wherein the secondary central points are calculated by rounding an average value of each of the four integer samples and the primary central point.

11. The apparatus as claimed in one of claims 8 to 10, wherein the quarter-pels are classified as quarter-pels in edges of the one interpolation block, and remaining quarter-pels corresponding between the primary central point and the calculated half-pels.

12. The apparatus as claimed in claim 11, wherein the quarter-pels in the edges are calculated by rounding an average value of each of the integer samples and the calculated half-pels.

13. The apparatus as claimed in claim 11, wherein the remaining quarter-pels are calculated by rounding an average value of the primary central point and the calculated half-pels.

14. The apparatus as claimed in one of claims 8 to 13, wherein the eight-pels are calculated by rounding an average value of two adjacent point values in the diagonal direction.

15. The apparatus as claimed in one of claims 8 to 14, being included in an image decoder.

16. The apparatus as claimed in one of claims 8 to 15, being included in an image encoder.

17. An encoder adapted to operate according to one of claims 1 to 7.

18. A decoder adapted to operate according to one of claims 1 to 7.

A $\qquad$ B

$yFrac_c$

$xFrac_c$ | $8-xFrac_c$

$8-yFrac_c$

C $\qquad$ D

# FIG.1

FIG.2

FIG.3

EP 1 919 212 A1

FIG.4

INTEGER SAMPLE

HALF–PEL

FIG.5

FIG.6

INTEGER SAMPLE

HALF-PEL

, QUARTER-PEL

EIGHT-PEL

FIG.7

**European Patent Office**

## EUROPEAN SEARCH REPORT

Application Number

EP 07 11 8862

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIHVO T ET AL: "H.264/AVC interpolation optimization" SIGNAL PROCESSING SYSTEMS DESIGN AND IMPLEMENTATION, 2005. IEEE WORKSHOP ON ATHENS, GREECE NOVEMBER 2 - 4, 2005, PISCATAWAY, NJ, USA,IEEE, 2 November 2005 (2005-11-02), pages 307-312, XP010882587 ISBN: 0-7803-9333-3 * the whole document * | 1-18 | INV. H04N7/01 |
| X | EP 1 675 406 A (ST MICROELECTRONICS INC [US]) 28 June 2006 (2006-06-28) * abstract * * page 11, paragraph 88 - page 13, paragraph 117 * | 1-18 | |
| A | US 6 628 327 B1 (AOKI SHIN [JP] ET AL) 30 September 2003 (2003-09-30) * page 9, left-hand column, line 49 - page 9, left-hand column, line 62; figures 12a-12c * | 1-18 | TECHNICAL FIELDS SEARCHED (IPC) H04N |

The present search report has been drawn up for all claims

| Place of search | Date of completion of the search | Examiner |
|---|---|---|
| Munich | 25 March 2008 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 8862

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2008

| Patent document cited in search report | | Publication date | Patent family member(s) | | Publication date |
|---|---|---|---|---|---|
| EP 1675406 | A | 28-06-2006 | JP<br>US | 2006180509 A<br>2006133506 A1 | 06-07-2006<br>22-06-2006 |
| US 6628327 | B1 | 30-09-2003 | JP<br>JP | 3806211 B2<br>10200906 A | 09-08-2006<br>31-07-1998 |

EPO FORM P0459

For more details about this annex : see Official Journal of the European Patent Office, No. 12/82